# EUROPÄISCHE PATENTSCHRIFT

(11) **EP 1 727 678 B1**
(45) Veröffentlichungstag und Bekanntmachung des Hinweises auf die Patenterteilung: **20.06.2007**
(21) Anmeldenummer: 05717039.1
(22) Anmeldetag: 15.03.2005
(51) Int. Cl.: B41F 33/00, H04N 1/12, G01N 21/89, G01N 21/88

(54) **OPTISCHES SYSTEM ZUR ERZEUGUNG EINES BELEUCHTETEN GEBILDES**
OPTICAL SYSTEM FOR CREATING AN ILLUMINATED STRUCTURE
SYSTEME OPTIQUE DE PRODUCTION D'UNE FORME ECLAIREE

(30) Priorität: 23.03.2004 DE 102004014532
(43) Veröffentlichungstag der Anmeldung: 06.12.2006
(73) Patentinhaber: Koenig & Bauer AG, 97080 Würzburg (DE)
(72) Erfinder: DIEDERICHS, Carsten, 32657 Lemgo (DE)
(86) Internationale Anmeldenummer: PCT/EP2005/051161
(87) Internationale Veröffentlichungsnummer: WO 2005/092619

(56) Entgegenhaltungen:
- EP-A- 0 674 425
- DE-A1- 3 527 300
- FR-A- 2 377 891
- US-A- 4 567 506
- US-A- 5 999 636
- PATENT ABSTRACTS OF JAPAN Bd. 014, Nr. 009 (E-870), 10. Januar 1990 (1990-01-10) & JP 01 255371 A (FUJITSU LTD), 12. Oktober 1989 (1989-10-12) in der Anmeldung erwähnt

## Beschreibung

Die Erfindung betrifft ein optisches System zur Erzeugung eines beleuchteten Gebildes gemäß dem Oberbegriff des Anspruchs 1.

Die Anwendung besteht vorrangig in der Bildaufnahme von maschinell verarbeitetem Material zur industriellen Bildverarbeitung, z. B. von im Wertdruck verarbeitetem Bedruckstoff, wobei das optische System in oder an einer Druckmaschine, vorzugsweise in oder an einer Rotationsdruckmaschine, insbesondere in oder an einer in einem Offsetdruckverfahren, in einem Stahlstichverfahren, in einem Siebdruckverfahren oder in einem Heißprägeverfahren druckenden Druckmaschine, Verwendung findet. Alternativ oder zusätzlich zu einer Anordnung in oder an einer Druckmaschine kann das optische System auch in oder an einer ein Druckerzeugnis weiterverarbeitenden Maschine angeordnet sein. Die Bildaufnahme erfolgt zu dem Zweck einer zumindest ausschnittsweisen, vorzugsweise vollständigen Bilddarstellung des sich bewegenden Materials mit oder ohne einer Vermessung zuvor festgelegter Merkmale dieses Materials, um dieses Material hinsichtlich der Qualität eines zuvor in der Maschine ausgeführten Verarbeitungsschrittes zu beurteilen. Gattungsgemäße optische Systeme werden z. B. in einem Inline-Inspektionssystem eingesetzt und bilden damit einen Bestandteil eines Inline-Inspektionssystems.

Durch die DE 35 27 300 C2 ist eine Bildlesevorrichtung bekannt, wobei eine Beleuchtungseinrichtung mit mehreren Gruppen von Lichtquellen vorgesehen ist, wobei die Gruppen von Lichtquellen Licht zur Erzeugung eines Beleuchtungsstreifens emittieren, wobei eine Steuereinrichtung die Gruppen von Lichtquellen gepulst betreibt, wobei reihenförmig angeordnete Fotosensoren von der Oberfläche des Materials remittiertes Licht erfassen, wobei die Fotosensoren eine Zeilenkamera bilden, wobei den Gruppen von Lichtquellen eine von der Steuereinrichtung gesteuerte Stromquelle zugeordnet ist, wobei eine Einschaltdauer der Lichtquellen mit einer Belichtungsdauer der Zeilenkamera synchronisiert ist.

Durch die DE 41 02 122 A1 ist ein zur Anwendung in der Druckindustrie geeignetes Verfahren zur Untersuchung von bahnförmigem, durchscheinendem Material, insbesondere einer Papierbahn, bekannt, bei dem z. B. mit Leuchtdioden oder Laserdioden verwirklichte Blitzlichtlampen durch eine Papierbahn hindurchstrahlen, bei dem durch die Papierbahn strahlendes Licht zur Erzeugung eines Videosignals auf eine CCD-Matrix einer Kamera fällt, wobei aus der Beleuchtungseinrichtung in Richtung der Papierbahn austretendes Licht durch eine Milchglas-Diffusorscheibe strahlt.

Durch die DE 43 21 177 A1 ist eine Druckmaschine mit einer Inline-Bildinspektioneinrichtung zur Inspektion eines in der Druckmaschine erstellten Druckproduktes bekannt, wobei eine Bilddaten vom Druckprodukt an eine Recheneinrichtung liefernde Bilderfassungseinrichtung vorgesehen ist, wobei die Bilderfassungseinrichtung aus einem Messmodul oder mehreren jeweils einen definierten Bildbereich des Druckproduktes abtastenden Messmodulen und aus zumindest einer Zugeordneten, die Bilddaten in elektrischer Form bereitstellenden und vorzugsweise von den Messmodulen räumlich getrennten Empfangseinrichtung besteht, wobei die Messmodule und die mindestens eine Empfangseinrichtung mittels mindestens eines Bildleiters miteinander verbunden sind, wobei der Bilderfassungseinrichtung eine aus Präzisionshalogenlampen bestehende Beleuchtungseinrichtung zugeordnet ist, wobei ein Blasluftrohr mit Öffnungen in Richtung des Druckproduktes bei seiner Blasluftbeaufschlagung das Druckprodukt in einem definierten Abstand zur Beleuchtungseinrichtung hält und gleichzeitig mit der Blasluft die Beleuchtungseinrichtung kühlt.

Durch die DE 100 61 070 A1 ist eine Beleuchtungseinrichtung für eine optische Inspektionseinrichtung zur Untersuchung von Oberflächen bekannt, wobei mehrere vorzugsweise gleich lange, elektrisch miteinander verschaltete Trägerplatinen mit jeweils mehreren Reihen von Leuchtdioden linienartig in einem gemeinsamen, entsprechend der mit einer konstanten Lichtabstrahlung abzutastenden Objektfläche längbaren, steifen Montageprofil eingeschoben sind, wobei zwischen den Trägerplatinen und dem Montageprofil über eine mechanische Verbindung eine Wärmekopplung zur Kühlung der Leuchtdioden und ihrer Ansteuerelektronik erfolgt.

Durch die DE 202 13 431 U1 ist eine Einrichtung zur Qualitätskontrolle an Drucksachen bekannt, die gleichfalls ein in einer Druckmaschine angeordnetes Inline-Bildinspektionssystem bildet, wobei eine als eine Leuchtstoffröhre ausgebildete Beleuchtungseinrichtung und eine als eine Zeilenkamera ausgebildete Bildaufnahmeeinrichtung zum Einsatz gebracht werden.

Durch die DE 203 03 574 U1 ist ein Inline-Bildinspektionssystem für eine Druckmaschine, insbesondere einer Bogenoffsetdruckmaschine, bekannt, wobei eine als eine Leuchtstofflampe ausgebildete Beleuchtungseinrichtung unterhalb eines Fußtrittes nahe an einem einen Bedruckstoff führenden Gegendruckzylinder und eine als eine Zeilenkamera ausgebildete Bildaufnahmeeinrichtung in einem im Vergleich zur Beleuchtungseinrichtung weiteren Abstand vom Gegendruckzylinder in einer Zuordnung zum letzten Druckwerk der Druckmaschine angeordnet ist.

Durch die EP 0 762 174 A2 ist eine Vorrichtung zur linienförmigen Beleuchtung von Blattgut, wie z. B. Banknoten oder Wertpapieren, bekannt, wobei ein zylindrischer Spiegel mit zwei Spiegelsegmenten vorgesehen ist, wobei die Spiegelsegmente eine elliptische, zwei Fokuslinien aufweisende Grundfläche ausbilden, wobei die Breite der Spiegelsegmente größer oder gleich der Breite des Blattguts gewählt ist, wobei in der ersten Fokuslinie das von einer Transportvorrichtung senkrecht zu dieser Fokuslinie transportierte Blattgut und in der zweiten Fokuslinie eine Kaltlichtquelle, z. B. eine Reihe von Leuchtdioden (LED's), angeordnet ist, wobei ein Detektor, z. B. ein CCD-Array oder einzeln oder in Gruppen angeordnete Photodioden, das vom Blattgut remittierte Licht erfasst und in Signale zur Bearbeitung in einer Bearbeitungsanlage umwandelt.

Durch die US 4,972,093 ist ein Inspektionssystem bekannt, wobei ein bewegter Prüfling von einer impulsartig angesteuerten Leuchtdiodenanordnung mit einem zwischen 20 ms und 200 ms dauernden Lichtblitz beaufschlagt wird und eine Flächenkamera ein Bild von dem gesamten Prüfling aufnimmt.

Durch die US 5,936,353 ist ein optisches System zur Erzeugung eines beleuchteten Gebildes auf einer Oberfläche eines relativ zum Gebilde bewegten Materials bekannt, wobei eine Beleuchtungseinrichtung mit mehreren elektrisch in Reihe geschalteten Lichtquellen Licht zur Erzeugung des Gebildes emittiert, wobei eine Erfassungseinrichtung mit mindestens einem Detektor von der Oberfläche des Materials remittiertes Licht erfasst, wobei die Lichtquellen auf einer Platine angeordnet sind, wobei die Platine auf einem Träger angeordnet ist, wobei der Träger in seinem Inneren mindestens einen Kanal aufweist, wobei ein flüssiges oder gasförmiges Kühlmedium zur Kühlung der Lichtquellen den Kanal durchströmt.

Durch die JP 1-255 371 A ist eine Vorrichtung zur Ansteuerung von eine zeilenförmige Beleuchtungsvorrichtung bildenden Leuchtdioden mit einer Konstantstromquelle bekannt, wobei ein Treiberkreis der Leuchtdioden über eine Abtaststeuerschaltung und einen Multiplexer mit einer Zeilenkamera verbunden ist, sodass miteinander in Wirkverbindung stehende Leuchtdioden der Beleuchtungsvorrichtung und Fotosensoren der Zeilenkamera jeweils synchronisiert sind.

Der Erfindung liegt die Aufgabe zugrunde, ein optisches System zur Erzeugung eines beleuchteten Gebildes zu schaffen, bei dem eine Bildaufnahme über einen weiten Bereich der Geschwindigkeit des bewegten Materials mit der gleichen Lichtmenge erfolgt.

Die Aufgabe wird erfindungsgemäß durch die Merkmale des Anspruchs 1 gelöst.

Die mit der Erfindung erzielbaren Vorteile bestehen insbesondere darin, dass die Oberfläche des bewegten Materials unabhängig von der Geschwindigkeit des bewegten Materials immer mit der gleichen Lichtmenge beleuchtet wird, wodurch sich für die Bildaufnahme eine konstante Helligkeit ergibt und unbrauchbare Bildaufnahmen vermieden werden. Auch bildet die Einschaltdauer der Lichtquelle immer eine Teilmenge der Belichtungsdauer der Zeilenkamera, sodass für das Zeitverhalten von der Einschaltdauer der Lichtquelle und der Belichtungsdauer der Zeilenkamera eine feste Korrelation sichergestellt ist. Eine digitale Zeilenkamera weist i. d. R. einen elektronischen Shutter auf, der am Ende der Belichtungsdauer der Zeilenkamera einen Ausleseimpuls zum Auslesen der von Detektoren der Zeilenkamera aufgrund des von der Oberfläche des bewegten Materials remittierten Lichtes angesammelten elektrischen Ladung abgibt. Durch die erfindungsgemäße Korrelation zwischen der Einschaltdauer der Lichtquelle und der Belichtungsdauer der Zeilenkamera wird ein sogenanntes Überlaufen der für elektrische Ladungen empfindlichen Detektoren der Zeilenkamera vermieden. Vielmehr ergibt sich in vorteilhafter Weise zumindest über einen weiten Bereich der Geschwindigkeit des bewegten Materials eine Barriere und damit eine eindeutige Trennung zwischen in Bewegungsrichtung des Materials einander nachfolgend angeordneten Detektoren der Zeilenkamera.

Ein weiterer Vorteil besteht darin, dass das Material, auf dessen Oberfläche das Gebilde zu erzeugen ist, nicht in einem im direkten oder im umgelenkten Strahlengang liegenden Brennpunkt des von den Lichtquellen emittierten Lichtes angeordnet sein muss, um das Gebilde in einer ausreichenden Beleuchtungsstärke erscheinen zu lassen. Eine vom Brennpunkt unabhängige Anordnung des Gebildes relativ zum optischen System ist vorteilhaft, weil dann auf eine exakte Maßhaltigkeit bezüglich des Abstandes zwischen dem Gebilde und der Beleuchtungseinrichtung verzichtet werden kann. Das vorgeschlagene optische System ist demnach zum beleuchteten Material abstandstolerant. Außerdem ist zwischen Bauelementen des optischen Systems, die durch eine Verschmutzung, z. B. durch Staub und Abrieb, in ihrer Funktion beeinträchtigt werden können, und dem Material, insbesondere auch zu einer das Material bewegenden Transporteinrichtung, ein ausreichender Abstand vorgesehen, der das optische System und das Material unter den gegebenen Betriebsbedingungen in einer Druckmaschine dauerhaft und zuverlässig außerhalb eines Berührungskontaktes belässt und das optische System vorzugsweise außerhalb der Reichweite der vom bewegten Material aufgewirbelten Schmutzpartikel anordnet.

Ein von der Beleuchtungseinrichtung beleuchteter Beleuchtungsstreifen mit einer sich auf der Oberfläche des Materials orthogonal zu seiner Länge erstreckenden Breite, d. h. ein zweidimensionales, flächiges Gebilde, hat gegenüber einem auf einen Brennpunkt fokussierten linienförmigen, d. h. nur eindimensionalen, beleuchteten Gebilde den Vorteil, dass das beleuchtete Gebilde für eine zur Oberfläche des zumindest in Teilen reflektiven Materials unter einem Reflexionswinkel angeordnete Erfassungseinrichtung zur Erfassung des von der Oberfläche des Materials remittierten Lichtes auch bei einer reliefartigen Ausgestaltung der Oberfläche des Materials zuverlässig als eine virtuelle zeilenförmige Beleuchtungseinrichtung erscheint, weil aufgrund der Breite des Beleuchtungsstreifens sichergestellt ist, dass eine an der Oberfläche des Materials vorhandene Querschnittsfläche eines Erfassungswinkels der Erfassungseinrichtung, in welchem die Erfassungseinrichtung remittiertes Licht zu erfassen vermag, zumindest einen Teil einer sich über die Breite des Beleuchtungsstreifens erstreckenden Querschnittsfläche des von der Beleuchtungseinrichtung emittierten Lichtestrahlenbündels erfasst. Bei einer Vorrichtung, die Material nur linienförmig beleuchtet, besteht die Gefahr, dass das fokussierte Strahlenbündel von einer reliefartigen Oberfläche des Materials außerhalb des Erfassungswinkels der Erfassungseinrichtung reflektiert wird und folglich nicht erfasst werden kann. Im Gegensatz dazu ist das vorgeschlagene optische System auch für eine Bildaufnahme von Material mit einer diffus reflektierenden Oberfläche gut geeignet. Selbst bei einem Material mit einer reliefartigen Oberfläche tritt kaum eine Schattenwirkung auf.

Beim vorgeschlagenen optischen System ist dessen Beleuchtungseinrichtung vorzugsweise in Modulen, d. h. in eigenständigen Funktionseinheiten, aufgebaut, was den Vorteil hat, dass eine Zeilenlänge der zeilenförmigen Beleuchtungseinrichtung ohne teure Sonderanfertigung durch einfaches Aneinanderreihen von vorgefertigten, vorzugsweise funktionsgleichen Modulen in der benötigten Anzahl an die Breite des zu beleuchtenden Materials oder zumindest an die Länge des Beleuchtungsstreifens adaptierbar ist. Gleichfalls können auch wahlweise zielgerichtet die Lichtquellen nur in denjenigen Modulen aktiviert werden, die zur Beleuchtung der Breite des zu beleuchtenden Materials oder zumindest der Länge des Beleuchtungsstreifens benötigt werden, was beim Aufbau und beim Betrieb des optischen System für dessen Wirtschaftlichkeit von Vorteil ist.

Die Verwendung von mehreren Lichtquellen je Modul hat den Vorteil, dass sich in der Praxis unvermeidbare Unterschiede in dem von den Lichtquellen abgestrahlten Licht, z. B. in dessen Wellenlänge, durch Mischung der Strahlenbündel von benachbarten Lichtquellen vergleichmäßigen und das von der Beleuchtungseinrichtung insgesamt abgestrahlte Licht in seinen optischen Eigenschaften homogenisieren. Wenn in jedem Modul vorzugsweise mehrere Gruppen von Lichtquellen angeordnet sind, wobei sich die den Gruppen zugeordneten Lichtquellen in ihren optischen Eigenschaften unterscheiden, z. B. in der Farbe des von den Lichtquellen einer jeden Gruppe ausgestrahlten Lichtes, können die einzelnen Gruppen von Lichtquellen applikationsabhängig, z. B. nach der Farbe des Lichtes, ausgewählt und angesteuert werden.

Das vorgeschlagene optische System hat den Vorteil, dass es einen unter Umständen eine große Länge von z. B. über einen Meter aufweisenden Beleuchtungsstreifen durch eine gleichmäßige, bedarfsgerechte Lichtverteilung mit einer homogenen, ausreichend großen Beleuchtungsstärke beaufschlagt und durch seinen modularen, wenig störanfälligen Aufbau auf einfache Weise an die jeweiligen Erfordernisse in einer Druckmaschine anpassbar ist. Da das zu beleuchtende Material nicht in einem Brennpunkt der Beleuchtungseinrichtung anzuordnen ist, entfällt auch die Notwendigkeit für eine exakte Ausrichtung des senkrechten Abstandes der Lichtquellen zur Oberfläche des Materials sowie eine Überwachung dieses Abstandes während des laufenden Einsatzes des optischen Systems, was die Handhabung des optischen Systems vor Ort in einem Industriebetrieb erheblich vereinfacht.

Ausführungsbeispiele der Erfindung sind in den Zeichnungen dargestellt und werden im Folgenden näher beschrieben.

Es zeigen:
- Fig. 1: eine Oberfläche eines bewegten Materials mit einem Beleuchtungsstreifen in einer Draufsicht;
- Fig. 2: eine schematische Darstellung des optischen Systems;
- Fig. 3: eine einzelne Lichtquelle der Beleuchtungseinrichtung;
- Fig. 4: eine zeilenförmige Anordnung von Lichtquellen auf einer gemeinsamen Platine;
- Fig. 5: eine Strahlenbündelung mit einem ersten Spiegel;
- Fig. 6: eine Strahlenbündelung mit einem ersten Spiegel längs zur Länge des Beleuchtungsstreifens;
- Fig. 7: eine Umlenkung des Strahlenbündels aus einem zentralen Bereich der Lichtquelle mit einem zweiten Spiegel;
- Fig. 8: eine Umlenkung des Strahlenbündels aus einem zentralen Bereich der Lichtquelle mit einem zweiten Spiegel, wobei die Strahlung längs zur Länge des Beleuchtungsstreifens stärker gebündelt ist als längs zu dessen Breite;
- Fig. 9: eine Bündelung der Strahlung aus einem zentralen Bereich der Lichtquelle mit einer Konvexlinse;
- Fig. 10: eine Bündelung der Strahlung aus einem zentralen Bereich der Lichtquelle mit einer Konvexlinse, wobei die Strahlung längs zur Länge des Beleuchtungsstreifens stärker gebündelt ist als längs zu dessen Breite;
- Fig. 11: eine zumindest teilweise Überlagerung der Strahlung von zwei benachbarten Lichtquellen mit einem vorgelagerten Streukörper;
- Fig. 12: eine Seitenansicht des optischen Systems;
- Fig. 13: eine mit Lichtquellen bestückte Platine auf einem von einem Kühlmedium durchströmten Träger;
- Fig. 14: einen in zwei entgegengesetzten Richtungen von einem Kühlmedium durchströmten Träger;
- Fig. 15: einen Träger mit einer Kühlung mit zwei Peltierelementen;
- Fig. 16: eine Darstellung des Zeitverhaltens der Zeilenkamera und das der Lichtquellen;
- Fig. 17: in einer perspektivischen Ansicht ein Reflektormodul.

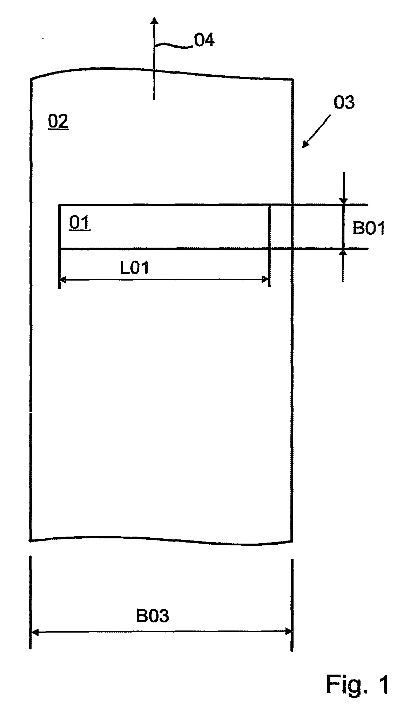

Beispielsweise in einer Druckmaschine, vorzugsweise in einer Rotationsdruckmaschine, insbesondere in einer in einem Offsetdruckverfahren druckenden Druckmaschine, wird ein in der Fig. 1 dargestelltes Material 03 mit einer Oberfläche 02 in einer durch einen Pfeil angedeuteten Bewegungsrichtung 04 bewegt. Die Bewegung erfolgt durch eine, z. B. in oder an der Druckmaschine angeordnete, hier nicht dargestellte Transporteinrichtung, wobei die Bewegung des Materials 03 während des Betriebes des nachfolgend noch näher beschriebenen optischen Systems vorzugsweise in nur einer einzigen Bewegungsrichtung 04 erfolgt, und zwar vorzugsweise linear. Die Geschwindigkeit des bewegten Materials 03 kann gleichförmig oder auch veränderlich sein.

Das Material 03 ist vorzugsweise ebenflächig und flach, z. B. als ein Bogen 03 oder als eine Materialbahn 03, ausgebildet. Das Material 03 ist insbesondere als ein z. B. aus Papier bestehender Bedruckstoff 03 ausbildet, z. B. als ein Wertpapier 03 oder als eine Banknote 03. Die Oberfläche 02 des Materials 03 kann ein Relief oder eine sonstige aus der Oberfläche 02 herausragende oder in die Oberfläche 02 als eine Vertiefung eingeprägte Struktur aufweisen, wobei eine Höhe oder Tiefe des Reliefs bzw. der Struktur im Vergleich zu einer Breite B03 des Materials 03 sehr klein ist. Zumindest ein Teil der Oberfläche 02 des Materials 03 ist z. B. durch Auftragung eines reflektiven Werkstoffs, z. B. eines Lackes, oder einer Folie, durch Einbringung eines Fensterfadens oder einer anderen vorzugsweise metallischen Applikation in das Material 03, reflektiv ausgebildet.

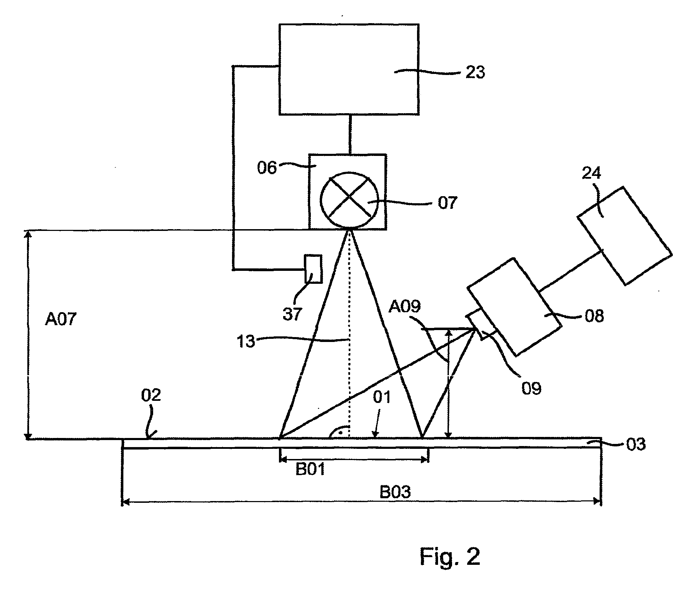

Eine in der Fig. 2 nur symbolhaft dargestellte Beleuchtungseinrichtung 06 erzeugt auf der Oberfläche 02 des Materials 03 ein beleuchtetes Gebilde 01 vorzugsweise in Form eines Beleuchtungsstreifens 01 mit einer Länge L01 und einer Breite B01 (Fig. 1), wobei sich die Breite B01 auf der Oberfläche 02 des Materials 03 orthogonal zur Länge L01 erstreckt. Die Breite B01 des Beleuchtungsstreifens 01 ist vorzugsweise in die Bewegungsrichtung 04 des Materials 03 gerichtet, wohingegen die Länge L01 des Beleuchtungsstreifens 01 vorzugsweise parallel zur Breite B03 des Materials 03 gerichtet ist und sich über Teile der Breite B03 des Materials 03 oder über dessen gesamte Breite B03 erstrecken kann. Die Breite B01 des Beleuchtungsstreifens 01 beträgt z. B. mindestens 3 mm, vorzugsweise mindestens 8 mm. Die Bewegungsrichtung 04 des Materials 03 ist somit vorzugsweise zumindest im Wesentlichen parallel zur Breite B01 des Beleuchtungsstreifens 01 gerichtet, wobei die Bewegungsrichtung 04 des Materials 03 innerhalb der von der Länge L01 und der Breite B01 des Beleuchtungsstreifens 01 aufgespannten Ebene liegt. Das Material 03 ist vorzugsweise zumindest im Bereich des Beleuchtungsstreifens 01 nicht gewölbt.

Die Beleuchtungseinrichtung 06 weist mehrere zeilenförmig nebeneinander angeordnete Lichtquellen 07 auf, sodass die gesamte Beleuchtungseinrichtung 06 zeilenförmig ausgebildet ist. Die zeilenförmig angeordneten Lichtquellen 07 der Beleuchtungseinrichtung 06 sind vorzugsweise parallel zur Länge L01 des Beleuchtungsstreifens 01 angeordnet. Die Lichtquellen 07 haben zur Oberfläche 02 des Materials 03 jeweils einen Abstand A07, wobei der Abstand A07 vorzugsweise zwischen 30 mm und 200 mm, insbesondere zwischen 70 mm und 140 mm beträgt. Der Abstand A07 der Lichtquellen 07 steht vorzugsweise jeweils lotrecht auf der Oberfläche 02 des Materials 03. Alle Lichtquellen 07 der Beleuchtungseinrichtung 06 sind vorzugsweise gleichartig ausgebildet, z. B. als helle, lichtestarke Leuchtdioden 07 oder als Laserdioden 07. In der Beleuchtungseinrichtung 06 können auch Gruppen von jeweils mehreren zeilenförmig nebeneinander angeordneten Lichtquellen 07 vorgesehen sein, wobei sich die einzelnen Gruppen von Lichtquellen 07 in ihren optischen Eigenschaften, z. B. in der Wellenlänge, des von ihnen emittierten Lichtes unterscheiden. So kann z. B. eine Gruppe von Lichtquellen 07 weißes Licht emittieren, wohingegen eine andere Gruppe von Lichtquellen 07 monochromes Licht emittiert. Es kann vorgesehen sein, dass eine mit der Beleuchtungseinrichtung 06 verbundene Steuereinrichtung 23 die Gruppen von Lichtquellen 07 applikationsabhängig, z. B. in Abhängigkeit von der Beschaffenheit der Oberfläche 02 des Materials 03 nach der Farbe des Lichtes ausgewählt und einzeln ansteuert. So kann die Steuereinrichtung 23 eine Gruppe von Lichtquellen 07 auch unabhängig von mindestens einer anderen Gruppe von Lichtquellen 07 z. B. in ihrer Helligkeit und/oder Leuchtdauer ansteuern. Der Beleuchtungsstreifen 01 ist außerhalb eines im direkten oder im umgelenkten Strahlengang liegenden Brennpunktes des von den Lichtquellen 07 emittierten Lichtes angeordnet.

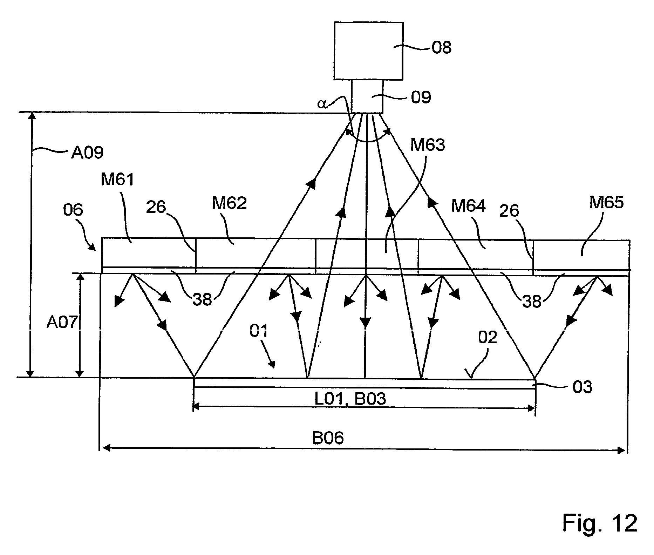

Die Beleuchtungseinrichtung 06 besteht z. B. aus mehreren zeilenförmig aneinander gereihten Modulen M61 bis M65 (Fig. 12) jeweils mit mehreren zeilenförmig nebeneinander angeordneten Lichtquellen 07, wobei eine Trennfuge 26 zwischen zwei benachbarten Modulen M61 bis M65 vorzugsweise schräg zur Länge L01 des Beleuchtungsstreifens 01 angeordnet ist. Die einzelnen Module M61 bis M65 der Beleuchtungseinrichtung 06 können z. B. funktionsgleich ausgebildet sein. So kann z. B. eine der Breite B03 des zu beleuchtenden Materials 03 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden oder es kann eine der Länge L01 des Beleuchtungsstreifens 01 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden. Auch können die Lichtquellen 07 einzelner ausgewählter Module M61 bis M65 unabhängig von den Lichtquellen 07 anderer M61 bis M65 aktiviert werden.

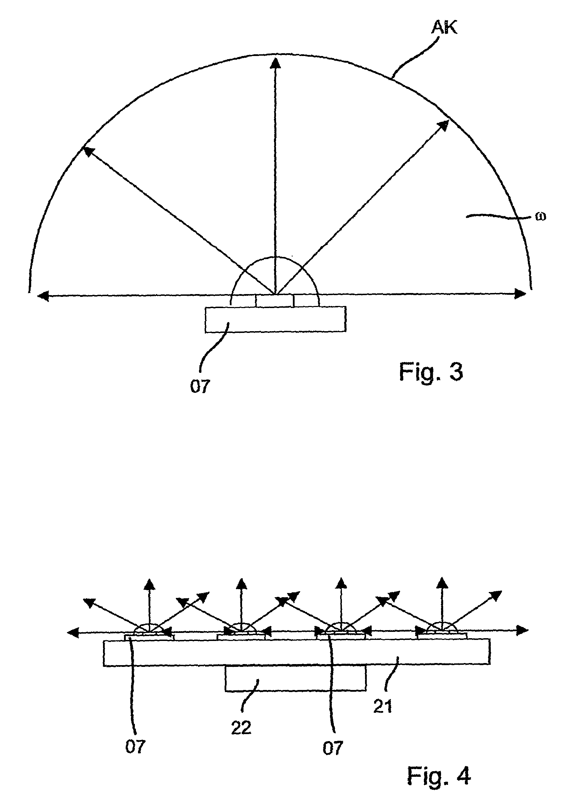

Fig. 3 zeigt in einer nur zweidimensionalen Darstellung eine einzelne Lichtquelle 07 der Beleuchtungseinrichtung 06. Die Lichtquelle 07 emittiert ihr Licht in einen Raumwinkel ω, wobei der Raumwinkel ω eine aus einer Kugel ausgeschnittene Fläche AK, also eine Kugeloberfläche AK, bis zur Größe einer Halbkugel aufspannt.

Fig. 4 zeigt mehrere, z. B. vier der in der Fig. 3 gezeigten Lichtquellen 07 zeilenförmig nebeneinander auf einer gemeinsamen Platine 21 angeordnet. Vorzugsweise ist die zu den jeweiligen Lichtquellen 07 gehörende Stromquelle 22 auf derselben Platine 21 angeordnet. Die Stromquelle 22 ist vorzugsweise als eine Konstantstromquelle 22, insbesondere als eine steuerbare Konstantstromquelle 22, ausgebildet.

Zu einem optischen System, das vorzugsweise Bestandteil eines in oder an einer Druckmaschine oder einer ein Druckerzeugnis weiterverarbeitenden Maschine angeordneten Inspektionssystems ist und das zur Beurteilung der Qualität von einem mit der Druckmaschine produzierten Druckerzeugnis verwendet wird, gehört außer der Beleuchtungseinrichtung 06 - wie es der Fig. 2 entnehmbar ist - zumindest auch eine Erfassungseinrichtung 08 mit mindestens einem in einem Abstand A09 von der Oberfläche 02 des Materials 03 angeordneten Detektor 09, wobei der Detektor 09 von der Oberfläche 02 des Materials 03 remittiertes Licht erfasst. Die Erfassungseinrichtung 08 ist z. B. als eine Kamera 08, vorzugsweise eine Zeilenkamera 08, insbesondere eine Farbzeilenkamera 08, ausgebildet. Auch die Erfassungseinrichtung 08 weist vorzugsweise mehrere zeilenförmig nebeneinander angeordnete Detektoren 09 auf, wobei die zeilenförmig angeordneten Detektoren 09 vorzugsweise parallel zur Länge L01 des Beleuchtungsstreifens 01 und/oder parallel zur Breite B03 des Materials 03 angeordnet sind. Ein zwischen Zeilen von zeilenförmig angeordneten Detektoren 09 bestehender Abstand ist vorzugsweise zur Bewegungsrichtung 04 des Materials 03 gleichgerichtet, d. h. in Bewegungsrichtung 04 des Materials 03 einander nachfolgend angeordnete Zeilen von Detektoren 09 sind vorzugsweise orthogonal zur Bewegungsrichtung 04 des Materials 03 angeordnet. Der Detektor 09 der Erfassungseinrichtung 08 kann z. B. als ein CCD-Array 09 oder als eine Gruppe von Photodioden 09 ausgebildet sein. Der Detektor 09 der Erfassungseinrichtung 08 wandelt das erfasste remittierte Licht in ein elektrisches Signal um und führt das elektrische Signal zu seiner Auswertung einer mit der Erfassungseinrichtung 08 verbundenen Bildverarbeitungseinrichtung 24 zu.

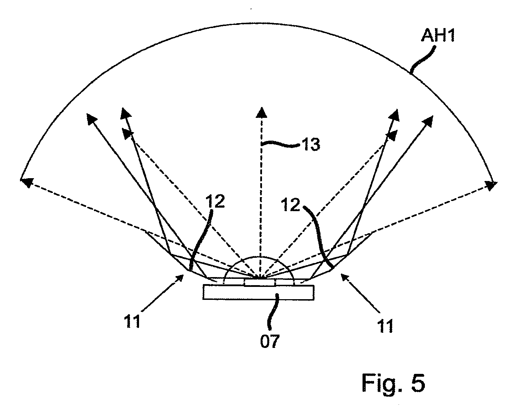

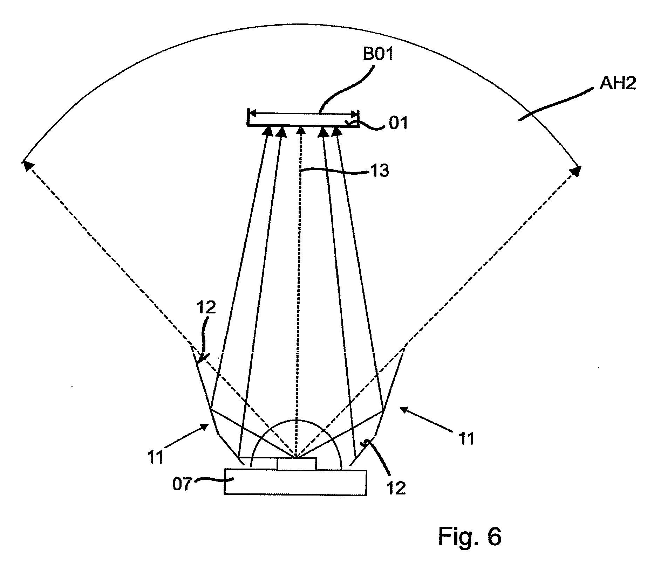

Fig. 5 zeigt, dass in dem optischen System den Lichtquellen 07 der Beleuchtungseinrichtung 06 mindestens ein erster Spiegel 11 mit mindestens einer längs zur Länge L01 und/oder zur Breite B01 des Beleuchtungsstreifens 01 gerichteten Wirkfläche 12 zugeordnet ist, wobei die Wirkfläche 12 des ersten Spiegels 11 das in den Raumwinkel ω emittierte Licht von mindestens einer der Lichtquellen 07 der Beleuchtungseinrichtung 06 auf eine kleinere erste Hüllfläche AH1 als die zu dem Raumwinkel ω gehörende Kugelfläche AK einschränkt. Die Wirkfläche 12 des ersten Spiegels 11 kann plan oder konkav ausgebildet sein. Dabei kann die mindestens eine längs zur Länge L01 des Beleuchtungsstreifens 01 gerichtete Wirkfläche 12 des ersten Spiegels 11 das in den Raumwinkel ω emittierte Licht von mindestens einer der Lichtquellen 07 der Beleuchtungseinrichtung 06 stärker auf eine kleinere zweite Hüllfläche AH2 einschränken als die mindestens eine längs zur Breite B01 des Beleuchtungsstreifens 01 gerichtete Wirkfläche 12 dieses ersten Spiegels 11, wie es die Fig. 6 im Vergleich zur Strahlenbündelung gemäß der Fig. 5 zeigt. Vorzugsweise weist mindestens eine Lichtquelle 07 der Beleuchtungseinrichtung 06 einen ersten Spiegel 11 mit mindestens zwei zu einem von der Lichtquelle 07 emittierten Zentralstrahl 13 symmetrischen Wirkflächen 12 auf.

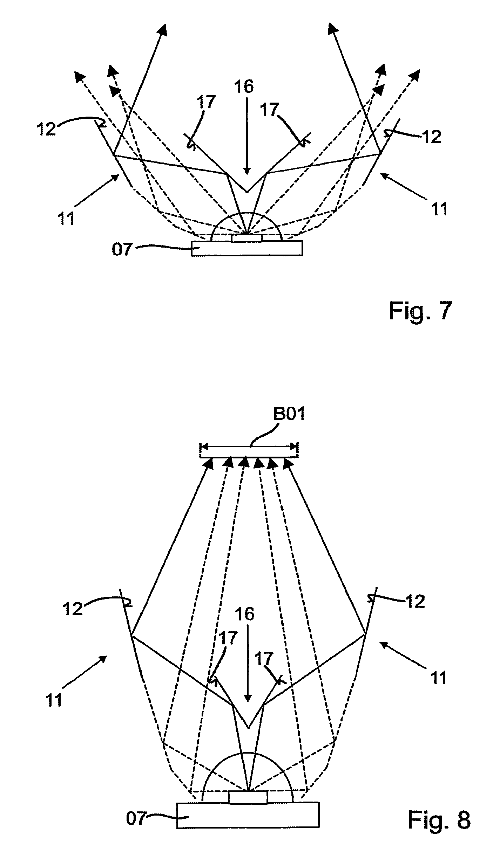

Zur Umlenkung der von mindestens einer der Lichtquellen 07 der Beleuchtungseinrichtung 06 in einem den Zentralstrahl 13 umgebenden zentralen Bereich 14 emittierten Strahlung kann, wie in den Fig. 7 und 8 dargestellt, z. B. ein zweiter Spiegel 16 vorgesehen sein, wobei dessen mindestens eine Wirkfläche 17 in dem den Strahlengang des Zentralstrahls 13 umgebenden zentralen Bereich 14 innerhalb des Raumwinkels ω des von der Lichtquelle 07 emittierten Lichtes angeordnet ist, wobei die Wirkfläche 17 des zweiten Spiegels 16 das von mindestens einer der Lichtquellen 07 der Beleuchtungseinrichtung 06 emittierte Licht gegen mindestens eine längs zur Länge L01 und/oder zur Breite B01 des Beleuchtungsstreifens 01 gerichtete Wirkfläche 12 des ersten Spiegels 11 umlenkt. Dabei kann die von der Lichtquelle 07 emittierte Strahlung vorzugsweise längs zur Länge L01 des Beleuchtungsstreifens 01 stärker gebündelt werden als die Strahlung längs zu dessen Breite B01. Auch die Wirkfläche 17 des zweiten Spiegels 16 kann plan oder konkav ausgebildet sein. Die dem zentralen Bereich 14 zuzuordnende, von den jeweiligen Lichtquellen 07 emittierte Strahlung ist in den Fig. 7 bis 10 jeweils mit durchgängigen Pfeillinien angedeutet, wohingegen von den Lichtquellen 07 in ihrem jeweiligen Raumwinkel ω peripher emittierte Strahlung mit gestrichelten Pfeillinien angedeutet ist.

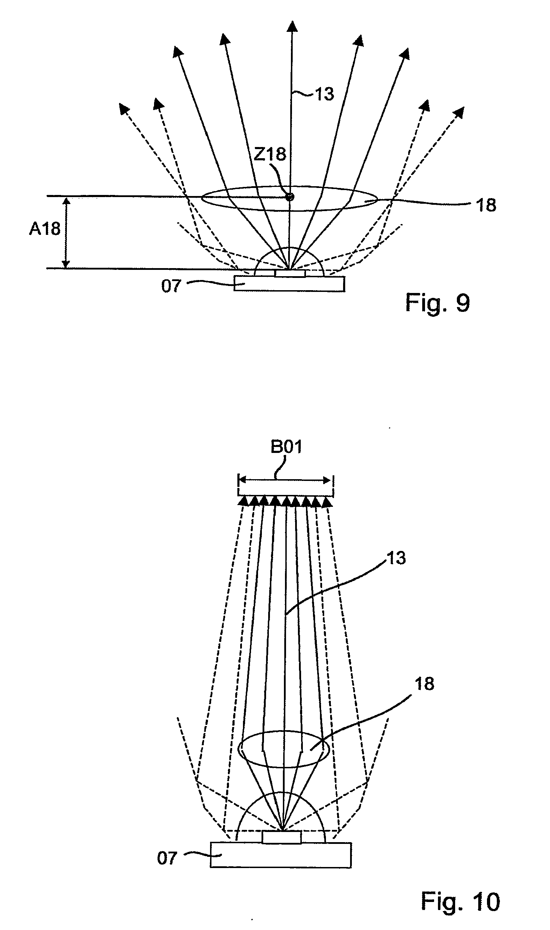

Alternativ kann gleichfalls zur Umlenkung der von mindestens einer der Lichtquellen 07 der Beleuchtungseinrichtung 06 in einem den Zentralstrahl 13 umgebenden zentralen Bereich 14 emittierten Strahlung gemäß den Fig. 9 und 10 mindestens eine Linse 18, insbesondere eine bikonvexe Linse 18, in dem den Strahlengang des Zentralstrahls 13 umgebenden zentralen Bereich 14 innerhalb des Raumwinkels ω des von mindestens einer der Lichtquellen 07 der Beleuchtungseinrichtung 06 emittierten Lichtes angeordnet sein, wobei zwischen der Lichtquelle 07 und einem Zentrum Z18 der Linse 18 ein Abstand A18 besteht, wobei der Abstand A18 vorzugsweise geringer als die Hälfte des Abstandes A07 zwischen der Lichtquelle 07 und der Oberfläche 02 des Materials 03 ist. Dabei kann die Linse 18 nicht rotationssymmetrisch ausgebildet sein, um die von der Lichtquelle 07 emittierte Strahlung vorzugsweise längs zur Länge L01 des Beleuchtungsstreifens 01 stärker zu bündeln als längs zu dessen Breite B01.

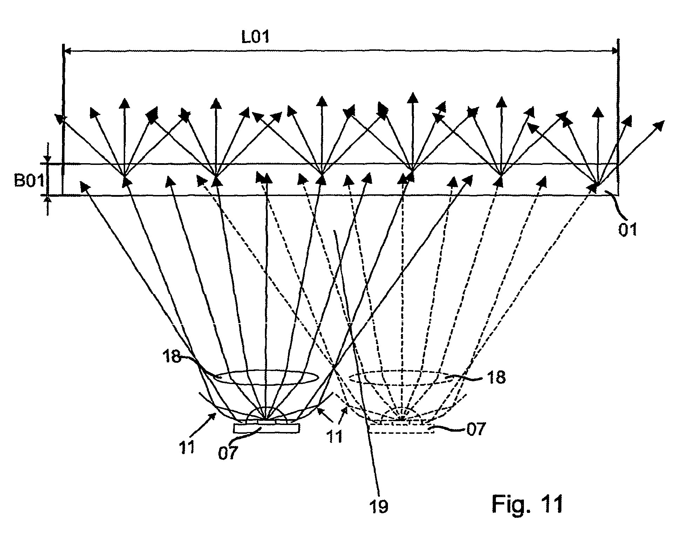

Die Fig. 11 zeigt, dass die Lichtquellen 07 der Beleuchtungseinrichtung 06 vorzugsweise derart angeordnet sind, dass sich die jeweiligen Raumwinkel ω oder zumindest die Hüllflächen AH1; AH2 des von mindestens zwei benachbarten Lichtquellen 07 der Beleuchtungseinrichtung 06 emittierten Lichtes zumindest in einem den Beleuchtungsstreifen 01 beleuchtenden Teilbereich 19 überlagern. Diese Überlagerung ist insbesondere auch dann vorgesehen, wenn die beteiligten benachbarten Lichtquellen 07 in zwei benachbarten Modulen M61 bis M65 angeordnet sind. Aus der Fig. 11 ist auch ersichtlich, dass an jeder einzelnen Lichtquelle 07 der Beleuchtungseinrichtung 06 jeweils ein erster Spiegel 11 mit mindestens einer Wirkfläche 12, vorzugsweise mit zwei zueinander symmetrischen Wirkflächen 12, zumindest längs zur Breite B01 des Beleuchtungsstreifens 01 vorgesehen sein kann.

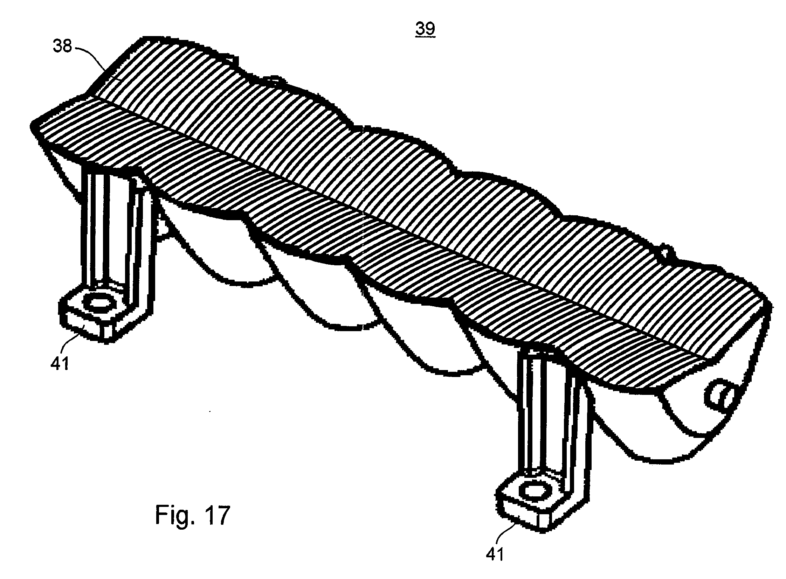

Des Weiteren kann die Beleuchtungseinrichtung 06 an einer der Oberfläche 02 des Materials 03 zugewandten Seite, d. h. an einer Lichtaustrittsseite der Beleuchtungseinrichtung 06, einen Streukörper 38, d. h. einen Licht streuenden Körper, aufweisen, z. B. ein Lentikular oder eine Prismenfolie, wobei der Streukörper 38 das von den Lichtquellen 07 auf die Oberfläche 02 des Materials 03 abgestrahlte Licht vorzugsweise nur oder zumindest ganz überwiegend längs zur Länge L01 des Beleuchtungsstreifens 01 verteilt. In einer bevorzugten Ausführung sind der Streukörper 38 und zumindest einer der Spiegel 11; 16 der Beleuchtungseinrichtung 06 in einem einzigen, als Reflektormodul 39 bezeichneten Bauteil ausgebildet, wobei vorzugsweise eine Gruppe von z. B. fünf bis zehn linienförmig nebeneinander angeordneten Lichtquellen 07 ihr Licht jeweils in ein entlang dieser Reihe von Lichtquellen 07 angeordnetes Reflektormodul 39 einstrahlen. Zu diesem Zweck sind die Lichtquellen 07 an der der Lichtaustrittsseite diametral gegenüberliegenden Seite des Reflektormoduls 39 angeordnet oder dort sogar in den Reflektormodul 39 eingesenkt. Das Reflektormodul 39 ist ein z. B. aus einem vorzugsweise transparenten Kunststoff spritzgießtechnisch gefertigtes Bauteil. Das Reflektormodul 39 ist demnach vorzugsweise als ein insbesondere massives Formteil ausgebildet, in dem der Streukörper 38 und zumindest einer der Spiegel 11; 16 gemeinsam ausgebildet sind, und zwar derart, dass in dem Formteil keine optisch relevante Grenzfläche den Streukörper 38 von dem mindestens einen Spiegel 11; 16 trennt. Fig. 17 zeigt in einer perspektivischen Ansicht beispielhaft ein Reflektormodul 39 mit einem an der Lichtaustrittsfläche vorzugsweise integriert ausgebildeten Streukörper 38, wobei der Streukörper 38 an der Lichtaustrittsfläche des Reflektormoduls 39 z. B. als eine Rillenstruktur ausgebildet ist, d. h. an dem Formteil z. B. angeformt sind, wobei das Reflektormodul 39 in der Beleuchtungseinrichtung 06 derart angeordnet wird, dass die parallel verlaufenden Rillen vorzugsweise mit der Bewegungsrichtung 04 des Materials 03 gleichgerichtet sind. Auch die Anordnung der Spiegel 11; 16 und/oder die Linse 18 können integrativ in dem Reflektormodul 39 ausgebildet sein. Daher ist das Reflektormodul 39 vorzugsweise mit einer sich in Längsrichtung der Beleuchtungseinrichtung 06 erstreckenden Vertiefung ausgebildet. Das Reflektormodul 39 ist vorzugsweise aus mehreren aneinandergereihten Segmenten aufgebaut, wobei jedes Segment den von einer der Lichtquellen 07 in das Reflektormodul 39 eingespeisten Lichtstrahlengang formt. Das Reflektormodul 39 ist vorzugsweise auf der die Lichtquellen 07 tragenden Platine 21 oder auf dem Träger 27 z. B. mit an dem Reflektormodul 39 angeformten Montageelementen 41 aufmontiert. Jedem der längs zur Breite B01 des Beleuchtungsstreifens 01 angeordneten Modulen M61 bis M65 ist vorzugsweise jeweils mindestens ein Reflektormodul 39 zugeordnet.

Der Streukörper 38 der Beleuchtungseinrichtung 06 wirkt damit gleichfalls wie die Anordnung der Spiegel 11; 16 und/oder der Linse 18 hinsichtlich der Verteilung des von den Lichtquellen 07 emittierten Lichtes formend und homogenisierend. Insbesondere der Streukörper 38 trägt zu einer diffusen, schattenfreien Ausleuchtung des Beleuchtungsstreifens 01 selbst auf einer mit einer feinen Struktur versehenen Oberfläche 02 des Materials 03 bei, wobei der Beleuchtungsstreifen 01 trotz des Abstandes A07, den die Lichtquellen 07 jeweils zur Oberfläche 02 des Materials 03 aufweisen, gleichzeitig als ein sehr helles Leuchtband ausgebildet wird. Die Anordnung der Spiegel 11; 16 und/oder der Linse 18 sowie insbesondere der Streukörper 38 tragen dazu bei, dass aus der Beleuchtungseinrichtung 06 Licht in einer homogenen Lichtverteilung austritt und somit selbst auf einer spiegelnden Oberfläche 02 des Materials 03, z. B. auf einem reflektierenden Lack, einem Kaltsiegel, einem Fensterfaden, einem Patch oder ähnlichem, eine innere Struktur der Beleuchtungseinrichtung 06, d. h. die Anordnung von deren einzelnen Lichtquellen 07, nicht abgebildet und folglich auch bei einer Betrachtung unter dem entsprechenden Reflexionswinkel nicht sichtbar wird.

Fig. 12 zeigt eine Ansicht des optischen Systems, wobei die Betrachtung aus einer lotrecht zur Bewegungsrichtung 04 des Materials 03 stehenden Ebene erfolgt. Die Beleuchtungseinrichtung 06 und der auf der Oberfläche 02 des Materials 03 beleuchtete Beleuchtungsstreifen 01 sind im Abstand A07 parallel zueinander angeordnet, jedoch kann eine Erstreckung der Beleuchtungseinrichtung 06, d. h. ihre Länge B06, größer sein als die Länge L01 des Beleuchtungsstreifens 01 oder als die Breite B03 des Materials 03. Die Beleuchtungseinrichtung 06 ist in mehrere Module M61 bis M65 aufgeteilt, d. h. in diesem Beispiel in fünf zeilenförmig nebeneinander angeordnet Module M61 bis M65, wobei die in jedem Modul M61 bis M65 angeordneten Lichtquellen 07 jeweils Licht zum Beleuchtungsstreifen 01 emittieren. Das vom Beleuchtungsstreifen 01 remittierte Licht wird von dem im Abstand A09 von der Oberfläche 02 des Materials 03 angeordneten Detektor 09 der Erfassungseinrichtung 08 innerhalb eines sich längs zur Länge L01 des Beleuchtungsstreifens 01 öffnenden, räumlichen Erfassungswinkels α erfasst, wobei der Erfassungswinkel α in diesem Beispiel derart bemessen ist, das er das vom Beleuchtungsstreifen 01 remittierte Licht über die gesamte Länge L01 des Beleuchtungsstreifens 01 erfasst. Der Erfassungswinkel α bildet an der Oberfläche 02 des Materials 03 eine Querschnittsfläche aus, sodass der Erfassungswinkel α zumindest einen Teil einer sich über die Breite B01 des Beleuchtungsstreifens 01 erstreckenden Querschnittsfläche des von der Beleuchtungseinrichtung 06 emittierten Lichtestrahlenbündels erfasst. Die vom Erfassungswinkel α erfasste Querschnittsfläche ist vorzugsweise zumindest so groß wie die auf der Oberfläche 02 des Materials 03 durch die Länge L01 und Breite B01 des Beleuchtungsstreifens 01 aufgespannte Fläche. In Bewegungsrichtung 04 des Materials 03 sind die Beleuchtungseinrichtung 06 und die Erfassungseinrichtung 08 vorzugsweise derart voneinander beabstandet angeordnet, dass das von den Lichtquellen 07 der Beleuchtungseinrichtung 06 zur Oberfläche 02 des Materials 03 emittierte Licht von der Oberfläche 02 des Materials 03 zum Detektor 09 der Erfassungseinrichtung 08 entsprechend der Gesetzmäßigkeit "Einfallswinkel ist gleich Ausfallswinkel" remittiert wird. Der aufgrund des "Einfallswinkels" erwartete "Ausfallswinkel", d. h. der Reflexionswinkel, kann jedoch in Abhängigkeit von der Beschaffenheit der Oberfläche 02 des Materials 03, insbesondere in Abhängigkeit von deren Struktur, insbesondere Mikrostrukturen, auch von der vorgenannten, von einer vollständig spiegelnden Fläche ausgehenden Idealbedingung abweichen.

Die Qualität eines mit der Erfassungseinrichtung 08 durch Erfassung des vom Beleuchtungsstreifen 01 remittierten Lichtes aufgenommenen Bildes ist maßgeblich davon abhängig, dass die Lichtquellen 07 der Beleuchtungseinrichtung 06 Licht konstanter Lichtstärke emittieren. Denn Schwankungen in der Lichtstärke des von den Lichtquellen 07 emittierten Lichtes führen in der Erfassungseinrichtung 08 bezüglich des der Bildverarbeitungseinrichtung 24 zugeführten Signals zu demselben Ergebnis wie Änderungen in der Beschaffenheit der Oberfläche 02 des angestrahlten Materials 03, sodass in der Bildverarbeitungseinrichtung 24 die Ursachen einer Signaländerung nicht unterschieden werden können. Unter diesen Umständen lassen sich aus einer in der Bildverarbeitungseinrichtung 24 vorgenommenen Bildauswertung keine verlässlichen Aussagen über die Beschaffenheit der Oberfläche 02 des angestrahlten Materials 03 gewinnen.

Abhilfe bieten hier Maßnahmen, die die Lichtstärke des von den Lichtquellen 07 der Beleuchtungseinrichtung 06 emittierten Lichtes konstant halten. Die in der Beleuchtungseinrichtung 06 verwendeten Lichtquellen 07 sind vorzugsweise als lichtstarke Leuchtdioden 07 oder Laserdioden 07 ausgebildet, deren Lichtstärke temperaturabhängig ist. Im Folgenden werden zur Erzielung einer konstanten Lichtstärke Maßnahmen zur Temperaturstabilisierung der auf dem Träger 21 angeordneten Lichtquellen 07 beschrieben. Der Vorteil der vorgeschlagenen Lösung besteht darin, dass die thermische Last der Lichtquellen 07 direkt am Entstehungsort abgeführt wird, wodurch sich kurze Regelzeiten erreichen lassen.

Die Lichtquellen 07 sind vorzugsweise auf einer mit weiteren elektronischen Bauelementen bestückbaren und mit Leiterbahnen versehenen Platine 21 angeordnet. Der Halbleiter der Leuchtdioden 07 oder Laserdioden 07 steht vorzugsweise in direktem Berührungskontakt mit der Platine 21, die z. B. als MCPCB (metal core printed circuit board) oder als eine Platine 21 mit einem Kern aus Aluminium ausgebildet ist und an ihrer die Leuchtdioden 07 oder Laserdioden 07 tragenden Montageseite 32 zur Ausbildung eines möglichst geringen Wärmeübergangswiderstandes nur eine sehr dünne Auflage auf ihrem wärmeleitenden Untergrund aufweist.

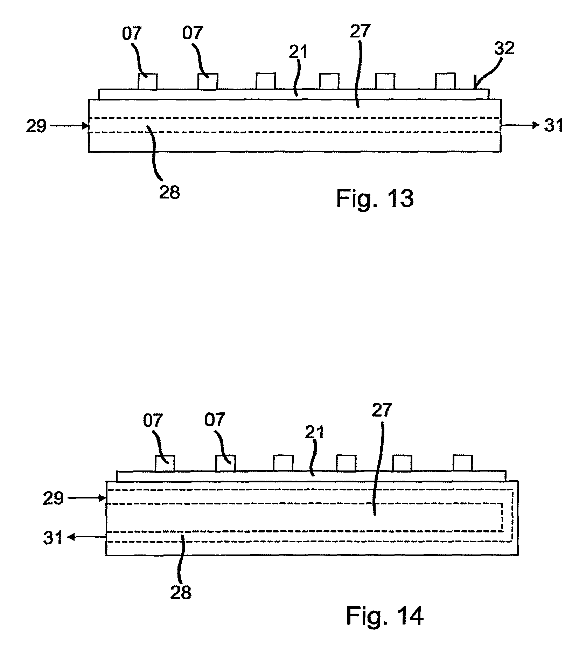

Fig. 13 zeigt eine Platine 21 mit mehreren darauf zeilenförmig angeordneten Lichtquellen 07, wobei die Platine 21 ihrerseits auf einem Träger 27 angeordnet ist, wobei der Träger 27 vorzugsweise in seinem Inneren vorzugsweise unterhalb der zeilenförmigen Anordnung der Lichtquellen 07 mindestens einen Kanal 28 aufweist, wobei ein flüssiges oder gasförmiges Kühlmedium, z. B. Wasser oder Luft, den Kanal 28 durchströmt. Vorzugsweise stirnseitig am Träger 27 sind zur Zuführung und Abführung des Kühlmediums eine mit einem Vorlauf verbundene Öffnung 29 und eine mit einem Rücklauf verbundene Öffnung 31 vorgesehen, wobei das Kühlmedium den Träger 27 z. B. geradlinig durchströmt. Fig. 14 zeigt einen Träger 27, den das Kühlmedium in zwei einander entgegengesetzten Richtungen durchströmt, wodurch im Träger 27 ein entlang der zeilenförmigen Anordnung der Lichtquellen 07 ausgeglichenes Temperaturprofil erreicht wird. Dazu kann der Kanal 28 an einem Ende des Trägers 27 um 180° umgelenkt sein.

Eine nicht dargestellte Regeleinrichtung kann die Temperatur des Kühlmediums am Vorlauf und die durch den Kanal 28 strömende Durchflussmenge konstant halten. Alternativ kann die Regeleinrichtung auch eine Differenz zwischen der Temperatur des Kühlmediums am Vorlauf und der Temperatur des Kühlmediums am Rücklauf konstant halten. Dabei ist weniger die absolute Temperatur des Kühlmediums von Bedeutung, sondern vielmehr, dass eine für die Lichtquellen 07 maximal zulässige Temperatur, die sich aus den Wärmeübergangswiderständen der beteiligten Werkstoffe ergibt, nicht überschritten wird, was von der Regeleinrichtung durch eine Überwachung der Temperatur und einen darauf reagierenden Regelungseingriff verhindert wird. Wenn ein in seiner Temperatur oder Durchflussmenge regelbares Kühlmedium nicht zur Verfügung steht, kann die Kühlung der Lichtquellen 07 auch über ein externes, nicht mit der Platine 21 verbundenes Kühlgerät (nicht dargestellt) erfolgen.

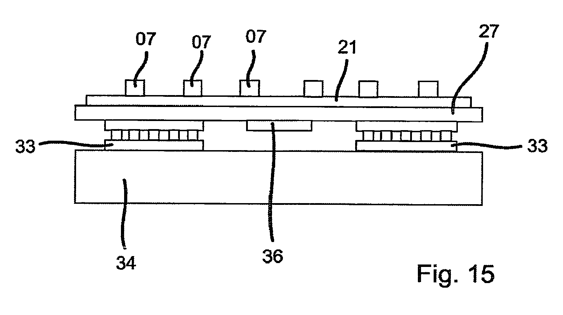

Eine Alternative zur Verwendung eines strömenden Kühlmediums zeigt die Fig. 15. Die mit den Lichtquellen 07 bestückte Platine 21 ist auf einem Träger 27 angeordnet, wobei der Träger 27 seinerseits auf mindestens einem Peltierelement 33, vorzugsweise aber mehreren Peltierelementen 33, angeordnet ist, wobei die Peltierelemente 33 jeweils mit einem vom Träger 27 thermisch getrennten Kühlkörper 34 verbunden sind. Eine notwendige Temperaturmessung zur Regelung des mindestens einen Peltierelements 33 durch eine nicht dargestellte elektronische Regeleinrichtung wird direkt an dem Träger 27 durch einen an diesem angebrachten Temperatursensor 36 vorgenommen. Bei schwankender Umgebungstemperatur schwankt dann nur die Temperatur des Kühlkörpers 34, nicht aber die Temperatur der auf der Platine 21 angeordneten Lichtquellen 07. Die elektronische Regeleinrichtung kann in der mit der Beleuchtungseinrichtung 06 verbundenen Steuereinrichtung 23 integriert sein.

Da die Bewegung des bewegten Materials 03 in einer Druckmaschine oder einer ein Druckerzeugnis weiter verarbeitenden Maschine mit einer Geschwindigkeit von mehreren Metern pro Sekunde erfolgt, z. B. 3 m/s oder mehr, wobei z. B. in einer Bogendruckmaschine 15.000 oder auch mehr Bogen 03 pro Stunde bedruckt und durch die Druckmaschine transportiert werden, ist das optische System derart auszulegen, dass von dem bewegten Material 03 eine brauchbare Bildaufnahme möglich ist. Dabei ist zu beachten, dass sich bei einer als eine Zeilenkamera 08 ausgebildeten Erfassungseinrichtung 08 die erfasste Menge des von der Oberfläche 02 des bewegten Materials 03 remittierten Lichtes in Abhängigkeit von der Geschwindigkeit des bewegten Materials 03 ändert. Dadurch ändert sich auch die Helligkeit der Bildaufnahme. Bei größeren Geschwindigkeitsänderungen, wie sie in den genannten Maschinen üblicherweise auftreten können, kann die Bildaufnahme unbrauchbar werden.

Statt die Bildaufnahme der Erfassungseinrichtung 08, z. B. der Zeilenkamera 08, mit einem Encoder mit der Geschwindigkeit des bewegten Materials 03 zu synchronisieren, wird vorgeschlagen, eine Einschaltdauer t3 einer einzelnen Lichtquelle 07 oder einer Gruppe von Lichtquellen 07 der Beleuchtungseinrichtung 06, die vorzugsweise von einer von der Steuereinrichtung 23 gesteuerten Stromquelle 22, insbesondere einer Konstantstromquelle 22, angesteuert werden, mit einer Triggerung, d. h. einer Belichtungsdauer t1 der Zeilenkamera 08 zu synchronisieren, sodass die Oberfläche 02 des bewegten Materials 03 unabhängig von der Geschwindigkeit des bewegten Materials 03 immer mit der gleichen Lichtmenge beleuchtet wird. Dadurch ergibt sich eine konstante Helligkeit für das von der Erfassungseinrichtung 08, z. B. der Zeilenkamera 08 aufgenommene Bild über einen weiten Bereich der Geschwindigkeit des bewegten Materials 03, denn die Steuereinrichtung 23 bemisst die Einschaltdauer t3 einer einzelnen Lichtquelle 07 oder einer Gruppe von Lichtquellen 07 der Beleuchtungseinrichtung 06 stets geringer als die Belichtungsdauer t1 der Zeilenkamera 08.

Vorzugsweise sind - wie bereits beschrieben - in der Beleuchtungseinrichtung 06 mehrere Gruppen von Lichtquellen 07 vorgesehen, denen vorzugsweise jeweils mindestens eine Stromquelle 22, insbesondere eine Konstantstromquelle 22, zugeordnet ist. Die Einschaltzeiten t3 der Lichtquellen 07 werden von der mit der Beleuchtungseinrichtung 06 verbundenen Steuereinrichtung 23 z. B. gruppenweise oder auch einzeln unabhängig voneinander von den jeweiligen Stromquellen 22 angesteuert, sodass sich über die Länge der vorzugsweise zeilenförmig angeordneten Lichtquellen 07 der Beleuchtungseinrichtung 06 ein Lichtmengenprofil einstellen lässt. Die Einstellung eines Lichtmengenprofils vorzugsweise längs zur Länge L01 des Beleuchtungsstreifens 01 hat den Vorteil, dass Transmissionsverluste durch eine nicht dargestellte Optik der Erfassungseinrichtung 08, z. B. der Zeilenkamera 08, ausgeglichen werden können.

Darüber hinaus kann vorgesehen sein, dass ein z. B. mit der Steuereinrichtung 23 verbundener Lichtsensor 37 die abgestrahlte Lichtmenge der Lichtquellen 07 der Beleuchtungseinrichtung 06 misst, um anhand des Messsignals des Lichtsensors 37 die Einschaltdauer t3 der von den Stromquellen 22 mit der Steuereinrichtung 23 gesteuerten Lichtquellen 07 z. B. an ein Degradationsverhalten der Lichtquellen 07 anzupassen und mit der Ansteuerung der Lichtquellen 07 z. B. eine mit ihrer Alterung nachlassende Abstrahlung in ihrer Lichtmenge zu kompensieren. Auch kann die Steuereinrichtung 23 die Einschaltdauer t3 der Lichtquellen 07 z. B. an unterschiedliche optische Eigenschaften des zu beleuchtenden Materials 03 anpassen, insbesondere automatisch anpassen.

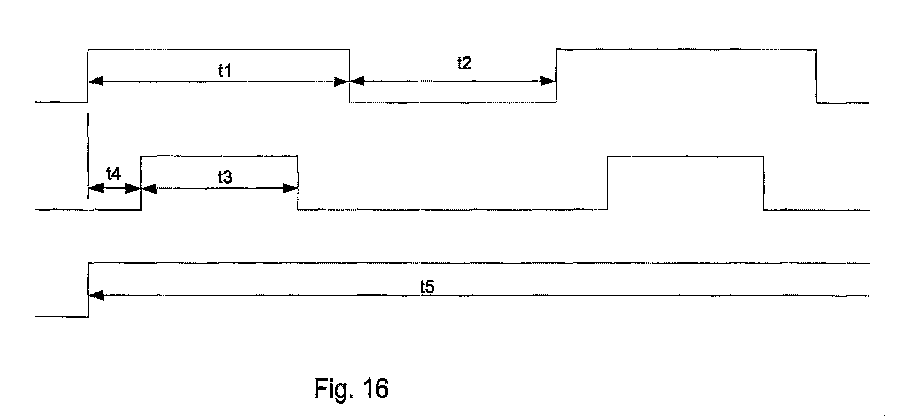

Fig. 16 zeigt das Zeitverhalten der Erfassungseinrichtung 08, z. B. der Zeilenkamera 08, und das der Lichtquellen 07 der Beleuchtungseinrichtung 06. Die Zeilenkamera 08 wird gemäß dem oberen, ersten Zeitverlauf zu einem bestimmten Zeitpunkt eingeschaltet, sodass zu diesem Zeitpunkt die Belichtungsdauer t1 der Zeilenkamera 08 beginnt. Nach Ablauf der Belichtungsdauer t1 folgt unmittelbar eine von der Geschwindigkeit des bewegten Materials 03 abhängige Auszeit t2 zwischen zwei in der Bewegungsrichtung 04 des Materials 03 einander nachfolgenden, benachbarten Bildzeilen der Zeilenkamera 08. Zumindest eine in Abhängigkeit von der Steuerung der Zeilenkamera 08 getriggerte Lichtquelle 07 wird gemäß dem mittleren, zweiten Zeitverlauf in der Fig. 16 von der von der Steuereinrichtung 23 gesteuerten Stromquelle 22 gleichzeitig mit der Belichtungsdauer t1 der Zeilenkamera 08 angesteuert, wobei nach einer Verzögerungszeit t4 für die Einschaltung der Lichtquelle 07, d. h. nach einer physikalisch bedingten Zeit bis zum Beginn ihrer Lichtemission, diese Lichtquelle 07 dann für die Einschaltdauer t3 eingeschaltet bleibt, wobei die Einschaltdauer t3, vorzugsweise auch eine Summe bestehend aus der Verzögerungszeit t4 und der Einschaltdauer t3, geringer bemessen ist als die Belichtungsdauer t1 der Zeilenkamera 08. Das Zeitverhalten für die Zeilenkamera 08 und die Lichtquellen 07 wiederholt sich periodisch in der zuvor beschriebenen festen Korrelation. Nur als Vergleich zu der in ihrer Einschaltdauer t3 getriggerten Lichtquelle 07 ist in dem unteren, dritten Zeitverlauf der Fig. 16 das Zeitverhalten der Einschaltdauer t5 für eine Konstantlichtquelle dargestellt.

### Bezugszeichenliste

- 01: Gebilde, Beleuchtungsstreifen
- 02: Oberfläche
- 03: Material, Bogen, Materialbahn, Bedruckstoff, Wertpapier, Banknote
- 04: Bewegungsrichtung
- 05: -
- 06: Beleuchtungseinrichtung
- 07: Lichtquelle, Leuchtdiode, Laserdiode
- 08: Erfassungseinrichtung, Kamera, Zeilenkamera, Farbzeilenkamera
- 09: Detektor, CCD-Array, Photodiode
- 10: -
- 11: Spiegel, erster
- 12: Wirkfläche
- 13: Zentralstrahl
- 14: zentraler Bereich
- 15: -
- 16: Spiegel, zweiter
- 17: Wirkfläche
- 18: Linse
- 19: Teilbereich
- 20: -
- 21: Platine
- 22: Stromquelle, Konstantstromquelle
- 23: Steuereinrichtung
- 24: Bildverarbeitungseinrichtung
- 25: -
- 26: Trennfuge
- 27: Träger
- 28: Kanal
- 29: Öffnung
- 30: -
- 31: Öffnung
- 32: Montageseite
- 33: Peltierelement
- 34: Kühlkörper
- 35: -
- 36: Temperatursensor
- 37: Lichtsensor
- 38: Streukörper
- 39: Reflektormodul
- 40: -
- 41: Montageelement

- A07: Abstand
- A09: Abstand
- A18: Abstand
- B01: Breite
- B03: Breite
- B06: Länge
- L01: Länge
- Z18: Zentrum

- AH1: Hüllfläche, erste
- AH2: Hüllfläche, zweite
- AK: Fläche, Kugeloberfläche

- M61: Modul
- M62: Modul
- M63: Modul
- M64: Modul
- M65: Modul

- t1: Belichtungsdauer
- t2: Auszeit
- t3: Einschaltdauer
- t4: Verzögerungszeit
- t5: Einschaltdauer

- α: Erfassungswinkel
- ω: Raumwinkel

## Patentansprüche

1. Optisches System zur Erzeugung eines beleuchteten Gebildes (01) auf einer Oberfläche (02) eines relativ zum Gebilde (01) bewegten Materials (03), wobei eine Beleuchtungseinrichtung (06) mit mehreren von einer Steuereinrichtung (23) gepulst betriebenen Lichtquellen (07) Licht zur Erzeugung des Gebildes (01) emittiert, wobei eine Erfassungseinrichtung (08) von den Lichtquellen (07) der Beleuchtungseinrichtung (06) emittiertes Licht erfasst, wobei die Steuereinrichtung (23) eine einzelne Lichtquelle (07) oder eine Gruppe von Lichtquellen (07) steuert, wobei eine Einschaltdauer (t3) der mindestens einen Lichtquelle (07) mit einer Belichtungsdauer (t1) der Erfassungseinrichtung (08) synchronisiert ist, wobei die Erfassungseinrichtung (08) ein periodisches Zeitverhalten bestehend aus der Belichtungsdauer (t1) und einer sich an die Belichtungsdauer (t1) unmittelbar anschließenden Auszeit (t2) aufweist, **dadurch gekennzeichnet, dass** die Auszeit (t2) der Erfassungseinrichtung (08) in Abhängigkeit von einer veränderlichen Transportgeschwindigkeit des bewegten Materials (03) eingestellt ist, wobei die mindestens eine Lichtquelle (07) der Beleuchtungseinrichtung (06) ein Zeitverhalten bestehend aus der Einschaltdauer (t3) und einer der Einschaltdauer (t3) unmittelbar vorausgehenden Verzögerungszeit (t4) aufweist, wobei die Steuereinrichtung (23) eine Summe bestehend aus der Verzögerungszeit (t4) und der Einschaltdauer (t3) der Lichtquelle (07) kürzer einstellt als die Belichtungsdauer (t1) der Erfassungseinrichtung (08), wobei die Einschaltdauer (t3) der Lichtquelle (07) innerhalb des Zeitraums der Belichtungsdauer (t1) der Erfassungseinrichtung (08) angeordnet ist.

2. Optisches System nach Anspruch 1, **dadurch gekennzeichnet, dass** die Steuereinrichtung (23) die Lichtquelle (07) gleichzeitig mit der Belichtungsdauer (t1) der Erfassungseinrichtung (08) einschaltet.

3. Optisches System nach Anspruch 1, **dadurch gekennzeichnet, dass** einer einzelnen der Lichtquellen (07) oder einer Gruppe von Lichtquellen (07) eine von der Steuereinrichtung (23) gesteuerte Stromquelle (22) zugeordnet ist.

4. Optisches System nach Anspruch 1, **dadurch gekennzeichnet, dass** die Erfassungseinrichtung (08) als eine Zeilenkamera (08) ausgebildet ist.

5. Optisches System nach Anspruch 1, **dadurch gekennzeichnet, dass** in der Beleuchtungseinrichtung (06) mehrere Gruppen von Lichtquellen (07) vorgesehen sind.

6. Optisches System nach Anspruch 5, **dadurch gekennzeichnet, dass** mehreren Gruppen von Lichtquellen (07) jeweils mindestens eine von der Steuereinrichtung (23) gesteuerte Stromquelle (22) zugeordnet ist.

7. Optisches System nach Anspruch 6, **dadurch gekennzeichnet, dass** die Stromquelle (22) als eine Konstantstromquelle (22) ausgebildet ist.

8. Optisches System nach Anspruch 1, **dadurch gekennzeichnet, dass** die Beleuchtungseinrichtung (06) auf der Oberfläche (02) des bewegten Materials (03) als beleuchtetes Gebilde (01) einen Beleuchtungsstreifen (01) mit einer Länge (L01) und einer Breite (B01) erzeugt.

9. Optisches System nach Anspruch 1, **dadurch gekennzeichnet, dass** die Lichtquellen (07) in der Beleuchtungseinrichtung (06) zeilenförmig angeordnet sind, wobei durch die Ansteuerung der Lichtquellen (07) über die Länge ihrer zeilenförmigen Anordnung ein Lichtmengenprofil eingestellt ist.

10. Optisches System nach Anspruch 9, **dadurch gekennzeichnet, dass** das Lichtmengenprofil längs zur Länge (L01) des Beleuchtungsstreifens (01) eingestellt ist.

11. Optisches System nach Anspruch 1, **dadurch gekennzeichnet, dass** die Steuereinrichtung (23) die Einschaltdauer (t3) der Lichtquellen (07) an unterschiedliche optische Eigenschaften des zu beleuchtenden Materials (03) anpasst.

12. Optisches System nach Anspruch 1, **dadurch gekennzeichnet, dass** ein mit der Steuereinrichtung (23) verbundener Lichtsensor (37) die abgestrahlte Lichtmenge der Lichtquellen (07) misst.

13. Optisches System nach Anspruch 12, **dadurch gekennzeichnet, dass** die Steuereinrichtung (23) anhand eines Messsignals des Lichtsensors (37) die Einschaltdauer (t3) der Lichtquellen (07) an ihr Degradationsverhalten anpasst.

14. Optisches System nach Anspruch 12, **dadurch gekennzeichnet, dass** die Steuereinrichtung (23) anhand des Messsignals des Lichtsensors (37) ein alterungsbedingtes Nachlassen der von den Lichtquellen (07) abgestrahlten Lichtmenge kompensiert.

15. Optisches System nach Anspruch 1, **dadurch gekennzeichnet, dass** die Erfassungseinrichtung (08) mehrere zeilenförmig nebeneinander angeordnete Detektoren (09) aufweist.

16. Optisches System nach Anspruch 15, **dadurch gekennzeichnet, dass** die zeilenförmig angeordneten Detektoren (09) parallel zur Länge (L01) des Beleuchtungsstreifens (01) und/oder parallel zu einer Breite (B03) des Materials (03) angeordnet sind.

17. Optisches System nach Anspruch 15, **dadurch gekennzeichnet, dass** ein zwischen Zeilen von zeilenförmig angeordneten Detektoren (09) bestehender Abstand zur Bewegungsrichtung (04) des Materials (03) gleichgerichtet ist.

18. Optisches System nach Anspruch 1, **dadurch gekennzeichnet, dass** die mindestens eine Lichtquelle (07) der Beleuchtungseinrichtung (06) eine konstante Lichtmenge emittiert.

## Claims

1. An optical system for producing an illuminated structure (01) on a surface (02) of a material (03) moved relative to the structure (01), wherein an illumination device (06) with a plurality of light sources (07) operated in a pulsed manner by a control device (23) emits light to produce the structure (01), wherein a detection device (08) detects light emitted by the light sources (07) of the illumination device (06), wherein the control device (23) controls an individual light source (07) or a group of light sources (07), wherein a switch-on duration (t3) of the at least one light source (07) is synchronized with an illumination duration (t1) of the detection device (08), wherein the detection device (08) has a periodic time behaviour consisting of the illumination duration (t1) and an off-time (t2) immediately following the illumination duration (t1), **characterized in that** the off-time (t2) of the detection device (08) is set in a manner dependent upon a variable conveying speed of the moved material (03), wherein the at least one light source (07) of the illumination device (06) has a time behaviour consisting of the switch-on duration (t3) and a delay time (t4) immediately preceding the switch-on duration (t3), wherein the control device (23) sets a sum consisting of the delay time (t4) and the switch-on duration (t3) of the light source (07) shorter than the illumination duration (t1) of the detection device (08), and wherein the switch-on duration (t3) of the light source (07) is within the time span of the illumination duration (t1) of the detection device (08).

2. An optical system according to Claim 1, **characterized in that** the control device (23) switches on the light source (07) simultaneously with the illumination duration (t1) of the detection device (08).

3. An optical system according to Claim 1, **characterized in that** a current source (22) controlled by the control device (23) is associated with an individual one of the light sources (07) or a group of light sources (07).

4. An optical system according to Claim 1, **characterized in that** the detection device (08) is constructed in the form of a line camera (08).

5. An optical system according to Claim 1, **characterized in that** a plurality of groups of light sources (07) are provided in the illumination device (06).

6. An optical system according to Claim 5, **characterized in that** at least one current source (22) controlled by the control device (23) is associated in each case with a plurality of groups of light sources (07).

7. An optical system according to Claim 6, **characterized in that** the current source (22) is constructed in the form of a constant-current source (22).

8. An optical system according to Claim 1, **characterized in that** the illumination device (06) produces an illumination strip (01) of a length (L01) and a width (B01) as an illuminated structure (01) on the surface (02) of the moved material (03).

9. An optical system according to Claim 1, **characterized in that** the light sources (07) are arranged in the form of lines in the illumination device (06), wherein a light-quantity profile is set by the actuation of the light sources (07) over the length of their arrangement in the form of lines.

10. An optical system according to Claim 9, **characterized in that** the light-quantity profile is set longitudinally with respect to the length (L01) of the illumination strip (01).

11. An optical system according to Claim 1, **characterized in that** the control device (23) adapts the switch-on duration (t3) of the light sources (07) to different optical properties of the material (03) to be illuminated.

12. An optical system according to Claim 1, **characterized in that** a light sensor (37) connected to the control device (23) measures the radiated quantity of light of the light sources (07).

13. An optical system according to Claim 12, **characterized in that** the control device (23) adapts the switch-on duration (t3) of the light sources (07) to the degradation behaviour thereof with reference to a measurement signal of the light sensor (37).

14. An optical system according to Claim 12, **characterized in that** with reference to the measurement signal of the light sensor (37) the control device (23) compensates a decrease - caused by deterioration - of the quantity of light radiated by the light sources (07).

15. An optical system according to Claim 1, **characterized in that** the detection device (08) comprises a plurality of detectors (09) arranged adjacent to one another in the form of lines.

16. An optical system according to Claim 15, **characterized in that** the detectors (09) arranged in the form of lines are arranged parallel to the length (L01) of the illumination strip (01) and/or parallel to a width (B03) of the material (03).

17. An optical system according to Claim 15, **characterized in that** a distance existing between lines of detectors (09) arranged in the form of lines is arranged in the same direction as the direction of movement (04) of the material (03).

18. An optical system according to Claim 1, **characterized in that** the at least one light source (07) of the illumination device (06) emits a constant quantity of light.

## Revendications

1. Système optique pour produire une forme (01), éclairée sur une surface (02) d'un matériau (03) déplacé par rapport à la forme (01), sachant qu'un dispositif d'éclairement (06), avec plusieurs sources lumineuses (07) fonctionnant de façon pulsée, par un dispositif de commande (23), émet de la lumière pour produire la forme (01), sachant qu'un dispositif de détection (08) détecte la lumière émise par les sources lumineuses (07) du dispositif d'éclairement (06), le dispositif de commande (23) commandant une source lumineuse (07) individuelle, ou bien un groupe de sources lumineuses (07), sachant qu'une durée de mise en service (t3) de la au moins une source lumineuse (07) est synchronisée avec une durée d'éclairement (t1) du dispositif de détection (08), sachant que le dispositif de détection (08) présente un comportement temporel périodique, composé de la durée d'éclairement (t1) et d'un temps de mise hors service (t2), faisant directement suite à la durée d'éclairement (t1), **caractérisé en ce que** le temps de mise de hors service (t2) du dispositif de détection (08) est réglé en fonction d'une vitesse de transport modifiée du matériau (03) déplacé, sachant que la au moins une source lumineuse (07) du dispositif d'éclairement (06) présente un comportement temporel formé de la durée de mise en service (t3) et d'un temps de retardement (t4), précédant directement la durée de mise en service (t3), le dispositif de commande (23) réglant une somme, composée du temps de retardement (t4) et de la durée de mise en service (t3) de la source lumineuse (07), à une valeur plus courte que la durée d'éclairement (t1) du dispositif de détection (08), sachant que la durée de mise en service (t3) de la source lumineuse (07) est disposée dans les limites de l'intervalle de temps de la durée d'éclairement (t1) du dispositif de détection (08).

2. Système optique selon la revendication 1, **caractérisé en ce que** le dispositif de commande (23) met en service la source lumineuse (07) simultanément à la durée d'éclairement (t1) du dispositif de détection (08).

3. Système optique selon la revendication 1, **caractérisé en ce qu'**une source de courant (22) commandée par le dispositif de commande (23) est associée à une source lumineuse individuelle parmi les sources lumineuses (07) ou à un groupe de sources lumineuses (07).

4. Système optique selon la revendication 1, **caractérisé en ce que** le dispositif de détection (08) est réalisé sous la forme de caméra à lignes (08).

5. Système optique selon la revendication 1, **caractérisé en ce que** plusieurs groupes de sources lumineuses (07) sont prévus dans le dispositif d'éclairement (06).

6. Système optique selon la revendication 5, **caractérisé en ce que** plusieurs groupes de sources lumineuses (07) sont chacun associés à au moins une source de courant (22) commandée par le dispositif de commande (23).

7. Système optique selon la revendication 6, **caractérisé en ce que** la source de courant (22) est réalisée sous la forme de source de courant constant (22).

8. Système optique selon la revendication 1, **caractérisé en ce que** le dispositif d'éclairement (06) produit, sur la surface (02) du matériau (03) déplacé, en tant que forme (01) éclairée, une bande d'éclairement (01) d'une longueur (L01) et d'une largeur (B01).

9. Système optique selon la revendication 1, **caractérisé en ce que** les sources lumineuses (07), dans le dispositif d'éclairement (06), sont disposées en formes de lignes, sachant qu'un profil de quantité de lumière est réglé, au moyen de la commande des sources lumineuses (07), sur la longueur de leur agencement en forme de lignes.

10. Système optique selon la revendication 9, **caractérisé en ce que** le profil de quantité de lumière est réglé longitudinalement par rapport à la longueur (L01) de la bande d'éclairement (01).

11. Système optique selon la revendication 1, **caractérisé en ce que** le dispositif de commande (23) adapte la durée de mise en service (t3) des sources lumineuses (07) à différentes propriétés optiques du matériau (03) à éclairer.

12. Système optique selon la revendication 1, **caractérisé en ce qu'**un capteur de lumière (37), relié au dispositif de commande (23), mesure la quantité de lumière irradiée des sources lumineuses (07).

13. Système optique selon la revendication 12, **caractérisé en ce que** le dispositif de commande (23), à l'aide d'un signal de mesure du capteur de lumière (37), adapte la durée de mise en service (t3) des sources lumineuses (07) à leur comportement en dégradation.

14. Système optique selon la revendication 12, **caractérisé en ce que** le dispositif de commande (23), à l'aide du signal de mesure du capteur de lumière (37), compense une diminution, imputable au vieillissement, de la quantité de lumière irradiée par les sources lumineuses (07).

15. Système optique selon la revendication 1, **caractérisé en ce que** le dispositif de détection (08) présente plusieurs détecteurs (09), disposés les uns derrière les autres en forme de lignes.

16. Système optique selon la revendication 15, **caractérisé en ce que** les détecteurs (09) disposés en forme de lignes sont disposés parallèlement à la longueur (L01) de la bande d'éclairement (01) et/ou parallèlement à une largeur (B03) du matériau (03).

17. Système optique selon la revendication 15, **caractérisé en ce qu'**un espacement, existant entre des lignes des détecteurs (09) disposés en forme de lignes, par rapport à la direction de déplacement (04) du matériau (03), est rectifié.

18. Système optique selon la revendication 1, **caractérisé en ce que** la au moins une source lumineuse (07) du dispositif d'éclairement (06) émet une quantité de lumière constante.
